# FASCICULE DE BREVET EUROPEEN

(11) **EP 2 715 264 B1**
(45) Date de publication et mention de la délivrance du brevet: **16.08.2017**
(21) Numéro de dépôt: 12705248.8
(22) Date de dépôt: 13.02.2012
(51) Int. Cl.: F28D 9/00, F02B 29/04

(54) **ECHANGEUR THERMIQUE, NOTAMMENT POUR VEHICULE AUTOMOBILE, ET DISPOSITIF D'ADMISSION D'AIR CORRESPONDANT**
WÄRMETAUSCHER, INSBESONDERE FÜR EIN KRAFTFAHRZEUG, UND ENTSPRECHENDE LUFTEINLASSVORRICHTUNG
HEAT EXCHANGER, IN PARTICULAR FOR A MOTOR VEHICLE, AND CORRESPONDING AIR INTAKE DEVICE

(30) Priorité: 26.05.2011 FR 1154577
(43) Date de publication de la demande: 09.04.2014
(73) Titulaire: Valeo Systemes Thermiques, 78320 Le Mesnil Saint Denis (FR)
(72) Inventeur: ODILLARD, Laurent, F-72390 Le Luart (FR); DEVEDEUX, Sébastien, F-78000 Versailles (FR)
(74) Mandataire: Metz, Gaëlle
(86) Numéro de dépôt international: PCT/EP2012/052388
(87) Numéro de publication internationale: WO 2012/159777

(56) Documents cités:
- EP-A1- 1 785 609
- EP-A1- 2 014 892
- WO-A1-2009/156365
- DE-A1-102005 050 738
- FR-A1- 2 855 605

## Description

L'invention concerne un échangeur thermique notamment pour véhicule automobile correspondant au préambule de la revendication 1. Un tel échangeur est connu de EP 1 785 609 A1. L'invention concerne encore un dispositif d'admission d'air comprenant un tel échangeur.

Un échangeur thermique, par exemple utilisé dans l'industrie automobile, comprend des éléments d'échange thermique et d'écoulement de fluide dans lesquels circulent des fluides échangeant de la chaleur entre eux. Les éléments d'échange thermique peuvent par exemple comprendre des tubes ou des plaques, des ailettes de perturbation de la circulation de gaz et/ou des perturbateurs d'écoulement de fluide ou autres.

On connaît de tels échangeurs utilisés dans le domaine automobile, notamment dans le domaine des moteurs thermiques suralimentés.

Dans ce cas, l'échangeur thermique encore appelé refroidisseur d'air de suralimentation (en abrégé RAS), permet de refroidir l'air de suralimentation du moteur par échange thermique avec un autre fluide comme de l'air extérieur ou un liquide comme l'eau du circuit de refroidissement du moteur, formant ainsi un échangeur du type air/air ou liquide/air.

Traditionnellement, l'air est reçu au niveau d'un collecteur d'admission, souvent désigné par l'homme du métier sous sa dénomination anglaise « intake manifold ».

Le collecteur est fixé à la culasse de la chambre de combustion, c'est-à-dire à l'entrée des cylindres. En fonction du régime moteur, l'air peut être refroidi, en tout ou partie, ou pas.

Selon une solution connue, l'échangeur thermique RAS est reçu dans le collecteur et permet de refroidir l'air qui le traverse.

À cet effet, le collecteur présente une face d'ouverture permettant l'introduction de l'échangeur RAS en son sein. Cette ouverture est ultérieurement fermée par un capot de fermeture.

Il est donc nécessaire de prévoir une étape supplémentaire d'assemblage. Ceci peut avoir un impact sur le coût.

De plus, cette réalisation peut présenter des inconvénients d'étanchéité, ce qui peut avoir pour conséquence de mauvaises performances d'échange thermique et notamment générer des phénomènes de vibrations. En effet, il faut gérer à la fois l'étanchéité entre le milieu extérieur et le dispositif, l'étanchéité entre le capot de fermeture et le faisceau, et l'étanchéité entre le faisceau et le collecteur.

En outre, la liaison entre le faisceau et le capot de fermeture latéral peut nécessiter l'ajout de pièces de fixation telles que des vis, ou des clips.

Il peut également être nécessaire d'ajouter des joints au niveau des connectiques d'eau.

L'invention a pour objectif de proposer un échangeur thermique présentant une étanchéité améliorée permettant d'optimiser les performances de l'échangeur, tout en simplifiant l'assemblage.

À cet effet, l'invention a pour objet un échangeur thermique entre au moins deux fluides conforme à la revendication 1. Ledit échangeur peut en outre comporter une ou plusieurs caractéristiques suivantes, prises séparément ou en combinaison :
- ledit carter présente une forme générale sensiblement en « U », et ledit capot présente une forme générale sensiblement en « U » complémentaire de la forme dudit carter;
- ledit capot est solidarisé par brasage;
- ledit capot présente une bordure périphérique formant saillie par rapport audit faisceau et audit carter;
- ladite bordure périphérique comprend des moyens de fixation à un contenant dudit échangeur;
- ledit échangeur comprend des moyens d'étanchéité au niveau de ladite bordure périphérique dudit capot.;
- ledit échangeur comporte au moins une tubulure d'entrée de fluide et une tubulure de sortie de fluide, et ledit capot présente des orifices associés pour le passage dudit fluide;
- lesdites tubulures sont brasées sur ledit capot;
- ledit carter présente des orifices associés pour la circulation dudit fluide entre ledit faisceau et lesdites tubulures;
- ledit échangeur est configuré pour refroidir l'air de suralimentation d'un moteur dans un véhicule automobile.

L'invention concerne aussi un dispositif d'admission d'air, notamment pour véhicule automobile, caractérisé en ce qu'il comprend un échangeur thermique tel que défini ci-dessus ainsi qu'un collecteur d'admission recevant ledit échangeur.

Selon un mode de réalisation, ledit dispositif comporte des moyens d'étanchéité entre ledit capot de fermeture dudit échangeur et ledit collecteur.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en perspective d'un échangeur thermique,
- la figure 2 est une vue en coupe de l'échangeur de la figure 1,
- la figure 3 est une vue partielle agrandie d'une partie de la vue en coupe de l'échangeur de la figure 2.

Dans ces figures, les éléments sensiblement identiques portent les mêmes références.

L'invention concerne un échangeur thermique, en particulier pour refroidir l'air de suralimentation pour moteur thermique de véhicule automobile.

Dans ce cas, l'échangeur peut être agencé dans un collecteur d'admission d'air (non représenté). Un tel collecteur (non illustré sur les figures), autrement appelé répartiteur de gaz d'alimentation, est généralement monté sur la culasse et permet l'admission de l'air de suralimentation dans la culasse.

L'ensemble formé par le collecteur d'admission d'air et l'échangeur reçu dans le collecteur forme un dispositif d'admission d'air de suralimentation.

Un tel échangeur peut être un échangeur dit « air-eau », c'est-à-dire un échangeur dans lequel les fluides qui échangent de la chaleur sont l'air et l'eau. Dans le cas d'un refroidisseur d'air de suralimentation; l'eau est de préférence de l'eau du circuit de refroidissement dit "basse température" dudit moteur; il s'agit typiquement d'eau glycolée.

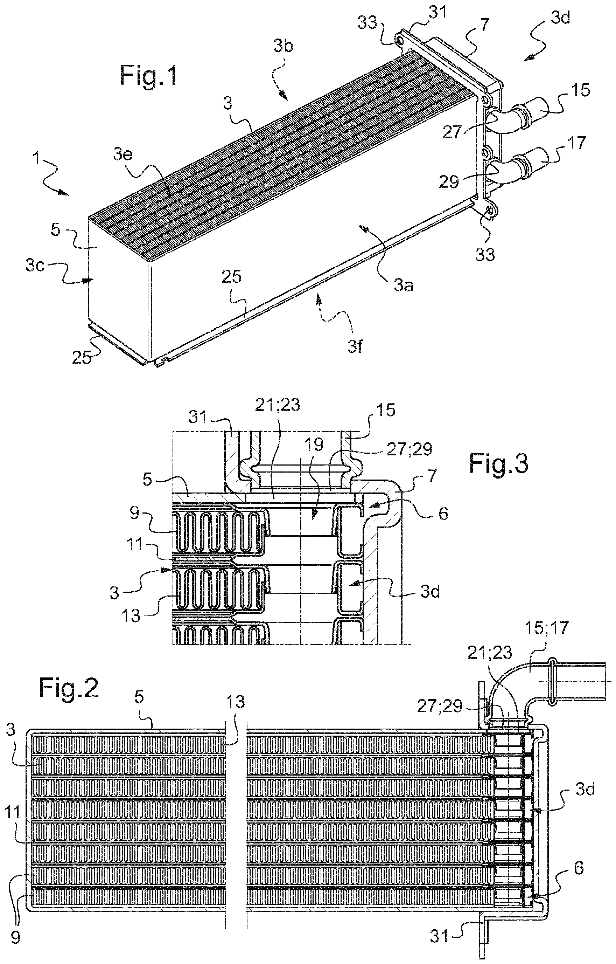

On a représenté sur la figure 1, un tel échangeur thermique désigné par la référence générale 1.

Selon le mode de réalisation l'échangeur 1 présente une forme générale sensiblement parallélépipédique.

Cet échangeur 1 comporte :
- un faisceau 3 d'échange thermique entre un premier fluide tel que l'air de suralimentation et un deuxième fluide tel que le liquide de refroidissement,
- un carter 5 de réception du faisceau d'échange 3, et
- un capot 7 de fermeture du carter 5.

### Le faisceau d'échange

Selon le mode de réalisation illustré, le faisceau 3 d'échange thermique présente une forme générale sensiblement parallélépipédique avec deux grandes faces latérales 3a,3b, deux petites faces latérales 3c,3d et deux faces d'extrémité 3e,3f.

Ce faisceau 3 peut comporter de façon classique un empilement de plaques ou de tubes, délimitant des premiers canaux 9 de circulation du premier fluide et des seconds canaux 11 de circulation du second fluide (voir figures 2 et 3).

Le premier fluide traverse par exemple les premiers canaux 9 dans le sens longitudinal du faisceau 3 et le second fluide traverse par exemple les seconds canaux 11 transversalement de la première face d'extrémité 3e vers la deuxième face d'extrémité opposée 3f par exemple (cf figure 1).

On peut prévoir dans les premiers canaux 9 des ailettes de perturbation 13 mieux visibles sur les figures 2 et 3, de façon à perturber l'écoulement de l'air dans ces premiers canaux 9 en augmentant la surface d'échange. En alternative ou en complément, on peut prévoir des turbulateurs (non représentés) du second fluide circulant dans les seconds canaux 11, de manière à améliorer l'échange thermique.

Ces perturbations permettent de faciliter les échanges thermiques entre l'air et l'eau au travers des parois des plaques ou des tubes.

En outre, comme on le constate sur la figure 1, l'échangeur 1 comporte des tubulures d'entrée 15 et de sortie 17, pour l'admission du second fluide dans le faisceau 3 et la sortie du second fluide après avoir circulé dans les seconds canaux.

À cet effet, les plaques ou les tubes du faisceau 3 définissant les seconds canaux 11 présentent des ouvertures 19 (cf figure 3) qui communiquent avec les ouvertures 19 correspondantes des plaques ou tubes adjacents et avec les tubulures d'entrée 15 et de sortie 17 du second fluide pour permettre la circulation du second fluide dans les seconds canaux.

### Carter

Comme dit précédemment, le carter 5 reçoit le faisceau d'échange 3.

Le carter 5 présente une forme ouverte, dans l'exemple illustré, au niveau d'une petite face latérale 3d du faisceau 3. Le carter 5 comporte donc une ouverture latérale 6 (figures 2 et 3) au niveau de la petite face latérale 3d du faisceau 3.

Selon le mode de réalisation illustré, le faisceau 3 étant parallélépipédique, le carter 5 présente une forme complémentaire sensiblement en « U ». Cette forme en « U » permet de couvrir les deux grands faces latérales 3a,3b et une petite face latérale 3c du faisceau 3.

Les faces d'extrémité 3e,3f du faisceau 3 ne sont pas couvertes par le carter 5 pour permettre la circulation du premier fluide, tel que l'air de suralimentation.

Par ailleurs, afin de permettre l'admission du second fluide dans les seconds canaux 11, le carter 5 présente des orifices d'entrée 21 et de sortie 23 (cf figures 2 et 3) communiquant respectivement avec les tubulures d'entrée 15 et de sortie 17. Ces orifices 21,23 communiquent également avec les ouvertures 19 des plaques ou tubes du faisceau 3.

En outre, en se référant à nouveau à la figure 1, le carter 5 peut comporter en outre un ou plusieurs bords relevés 25. Ces bords relevés 25 sont donc en saillie par rapport au plan général défini par les faces du carter 5.

Lorsque l'échangeur 1 est reçu dans un contenant tel qu'un collecteur d'admission d'air de suralimentation (non illustré), l'assemblage peut se faire par insertion de l'échangeur 1 dans le collecteur via une ouverture associée du collecteur par exemple selon le sens longitudinal de l'échangeur 3, et dans ce cas les bords relevés 25 peuvent servir de moyen de guidage mécanique pour l'assemblage. Un moyen de guidage complémentaire peut être prévu au niveau du collecteur comme par exemple des rainures de guidage.

Bien entendu, on peut prévoir d'autres moyens complémentaires de guidage portés d'une part par le carter 5 du faisceau 3 et d'autre part par le collecteur (non illustré).

En outre, le dispositif d'admission peut comporter un ou plusieurs moyens d'étanchéité entre l'échangeur 1 et le collecteur d'admission (non représenté).

### Capot de fermeture

Comme précisé précédemment, l'échangeur 1 comporte en outre un capot 7. Ce capot 7 est par exemple réalisé en matériau métallique.

Le carter 5 présente une forme ouverte latéralement qui est fermée par le capot 7. Le capot 7 est donc assemblé en regard d'une face latérale 3d du faisceau 3 en fermant l'ouverture 6 du carter 5.

Le capot 7 participe ainsi à la tenue du faisceau 3 de plaques ou de tubes et d'éventuels perturbateurs ou turbulateurs.

De plus, dans le cas d'un dispositif d'admission avec un échangeur 1 reçu dans un collecteur (non représenté), le capot 7 permet également de fermer l'ouverture du collecteur prévue pour l'insertion de l'échangeur 1 dans le collecteur.

Le capot 7 assure ainsi le maintien de l'échangeur 1 dans le collecteur d'admission d'air (non représenté) ou dans tout autre contenant de l'échangeur 1.

Le capot 7 est solidarisé au faisceau 3 et au carter 5.

On réalise ainsi un ensemble unitaire et indissociable. De la sorte, il n'est pas nécessaire de prévoir, lors de l'assemblage avec le collecteur d'admission, d'étape supplémentaire d'assemblage du capot 7 pour fermer le faisceau 3 et le collecteur (non représenté).

On diminue ainsi les coûts d'assemblage et il n'est pas non plus utile de prévoir des éléments de fixation supplémentaires tels que des vis ou un système de clippage entre le faisceau 3 et le capot 7.

Ce capot 7 est solidarisé de façon étanche au faisceau 3 et au carter 5. À titre d'exemple, cette solidarisation se fait par brasage.

On améliore ainsi l'étanchéité de l'échangeur 1.

De plus, dans le cas de l'insertion de l'échangeur 1 dans un collecteur d'admission d'air par exemple ou dans tout autre boîtier ou contenant, il n'y a plus que l'étanchéité entre le capot 7 et le collecteur à gérer; l'étanchéité entre le capot 7 et le faisceau 3 étant déjà assurée.

En outre, afin de fermer l'ouverture 6 du carter 5, le capot 7 présente donc une forme complémentaire de celle du carter 5.

Selon le mode de réalisation illustré avec un carter 5 sensiblement en « U », le capot 7 présente une forme générale complémentaire sensiblement en « U ».

Par ailleurs, comme cela est mieux visible sur les figures 2 et 3, le capot 7 coiffe la petite face latérale 3d du faisceau 3 ainsi que les extrémités du carter 5. De la sorte, le carter 5 se trouve intercalé entre le faisceau 3 et le capot 7.

Les tubulures d'entrée 15 et de sortie 17 sont donc fixées de façon étanche, par exemple par brasage, sur le capot 7. Il n'est donc pas nécessaire de prévoir des moyens d'étanchéité supplémentaires, tels que des joints, au niveau de ces tubulures 15,17.

Afin de permettre la distribution du second fluide, le capot 7 présente donc au droit des tubulures 15,17 des orifices 27,29 respectivement associés aux tubulures 15,17 et de forme complémentaires à la forme des tubulures 15,17.

Ces orifices 27,29 communiquent avec les orifices 21,23 associés prévus sur le carter 5, ainsi qu'avec les ouvertures correspondantes 21 du faisceau 3 pour permettre la circulation du second fluide dans les seconds canaux 11.

Le capot 7 assure ainsi une liaison étanche entre les tubulures d'entrée 15 et de sortie 17 du second fluide et le faisceau 3.

De plus, le capot 7 peut présenter une bordure périphérique 31 repliée mieux visible sur la figure 1.

Cette bordure 31 est par exemple repliée sensiblement à 90°.

Cette bordure 31 forme par exemple une saillie par rapport au carter 5 et au faisceau 3.

Dans le cas d'un dispositif d'admission par exemple comprenant un tel échangeur 1 reçu dans un collecteur, l'étanchéité entre l'échangeur 1 et le collecteur (non représenté) peut se faire au niveau de cette bordure périphérique 31.

À cet effet, on peut prévoir des moyens d'étanchéité (non représentés) au niveau de la bordure périphérique 31. Le capot 7 assure ainsi l'étanchéité extérieure du faisceau 3.

Ainsi avec un tel capot 7 latéral intégré à l'échangeur 1, l'étanchéité entre le faisceau 3 et le capot 7 est déjà assurée, et c'est le capot 7, en particulier sa bordure périphérique, qui supporte des moyens d'étanchéité (non représentés) avec un contenant de l'échangeur tel qu'un collecteur d'admission d'air.

On assure ainsi l'étanchéité entre l'échangeur 1 et le collecteur. Le capot 7 participe en outre à l'étanchéité entre le dispositif d'admission et le milieu extérieur.

De plus, le capot de fermeture latérale 7 peut présenter encore des moyens de fixation 33 sur le collecteur d'admission d'air (non représenté) par exemple, qui coopèrent avec des moyens de fixation complémentaires (non représentés) portés par le collecteur.

Cette fixation peut se faire par exemple par brasage, collage et/ou par vissage ou encore clippage.

Les moyens de fixation 33 sont dans l'exemple illustré prévus sur la bordure périphérique 31 du capot 7 en regard d'une face latérale du collecteur (non représenté) délimitant une ouverture par laquelle l'échangeur 1 est inséré dans le collecteur.

Le capot 7 assure ainsi à la fois le maintien de l'échangeur 1 dans le collecteur et la fixation de l'échangeur 1 au collecteur.

On comprend donc qu'un tel capot 7 latéral intégré au faisceau 3 permet de diminuer les étanchéités du faisceau 3 avec le milieu extérieur à gérer, et permet de définir un ensemble unitaire indissociable étanche qui soit en outre moins sujet aux vibrations en fonctionnement.

On obtient ainsi un échangeur 1 améliorant non seulement l'étanchéité mais aussi les phénomènes de vibrations.

## Revendications

1. Échangeur thermique entre au moins deux fluides, notamment pour véhicule automobile, comprenant :
- un faisceau (3) d'échange thermique entre lesdits fluides, et
- un carter (5) de réception dudit faisceau (5), présentant au moins une ouverture latérale (6),
ledit échangeur comprenant en outre un capot (7) de fermeture de ladite au moins une ouverture (6) dudit carter (5), solidarisé de façon étanche audit faisceau (3) et audit carter (5) de manière à former un ensemble unitaire indissociable **caractérisé en ce que** ledit carter (5) est intercalé entre ledit faisceau (3) et ledit capot (7).

2. Échangeur selon la revendication 1, **caractérisé en ce que** ledit carter (5) présente une forme générale sensiblement en « U », et **en ce que** ledit capot (7) présente une forme générale sensiblement en « U » complémentaire de la forme dudit carter (5).

3. Échangeur selon l'une des revendications 1 ou 2, **caractérisé en ce que** ledit capot (7) est solidarisé par brasage.

4. Échangeur selon l'une quelconque des revendications précédentes, **caractérisé en ce que** ledit capot (7) présente une bordure périphérique (31) formant saillie par rapport audit faisceau (3) et audit carter (5).

5. Échangeur selon la revendication 4, **caractérisé en ce que** ladite bordure périphérique (31) comprend des moyens de fixation à un contenant dudit échangeur.

6. Échangeur selon l'une des revendications 4 ou 5, **caractérisé en ce qu'**il comprend des moyens d'étanchéité au niveau de ladite bordure périphérique (31) dudit capot (7).

7. Échangeur selon l'une quelconque des revendications précédentes, **caractérisé en ce qu'**il comporte au moins une tubulure d'entrée (15) de fluide et une tubulure de sortie (17) de fluide, et **en ce que** ledit capot (7) présente des orifices associés (27,29) pour le passage dudit fluide.

8. Échangeur selon la revendication 8, **caractérisé en ce que** ledit carter (5) présente des orifices associés (21,23) pour la circulation dudit fluide entre ledit faisceau (3) et lesdites tubulures (15,17).

9. Dispositif d'admission d'air, notamment pour véhicule automobile, **caractérisé en ce qu'**il comporte un échangeur thermique (1) selon l'une quelconque des revendications précédentes, et **en ce qu'**il comporte en outre un collecteur d'admission recevant ledit échangeur (1).

## Patentansprüche

1. Wärmetauscher zwischen mindestens zwei Fluiden, insbesondere für ein Kraftfahrzeug, der enthält:
- ein Wärmetauscherbündel (3) zwischen den Fluiden, und
- einen Kasten (5) zur Aufnahme des Bündels (5), der mindestens eine seitliche Öffnung (6) aufweist,
wobei der Tauscher außerdem eine Abdeckung (7) zum Verschluss der mindestens einen Öffnung (6) des Kastens (5) enthält, die dicht fest mit dem Bündel (3) und mit dem Kasten (5) verbunden ist, um eine untrennbare einheitliche Baueinheit zu bilden, **dadurch gekennzeichnet, dass** der Kasten (5) zwischen das Bündel (3) und die Abdeckung (7) eingefügt ist.

2. Tauscher nach Anspruch 1, **dadurch gekennzeichnet, dass** der Kasten (5) allgemein im Wesentlichen die Form eines "U" hat, und dass die Abdeckung (7) allgemein im Wesentlichen die Form eines "U" hat, das zur Form des Kastens (5) komplementär ist.

3. Tauscher nach einem der Ansprüche 1 oder 2, **dadurch gekennzeichnet, dass** die Abdeckung (7) durch Löten fest verbunden wird.

4. Tauscher nach einem der vorhergehenden Ansprüche, **dadurch gekennzeichnet, dass** die Abdeckung (7) einen Umfangsrand (31) aufweist, der bezüglich des Bündels (3) und des Kastens (5) einen Vorsprung bildet.

5. Tauscher nach Anspruch 4, **dadurch gekennzeichnet, dass** der Umfangsrand (31) Einrichtungen zur Befestigung an einem Behälter des Tauschers enthält.

6. Tauscher nach einem der Ansprüche 4 oder 5, **dadurch gekennzeichnet, dass** er Dichteinrichtungen im Bereich des Umfangsrands (31) der Abdeckung (7) enthält.

7. Tauscher nach einem der vorhergehenden Ansprüche, **dadurch gekennzeichnet, dass** er mindestens einen Fluid-Eingangsrohrstutzen (15) und einen Fluid-Ausgangsrohrstutzen (17) aufweist, und dass die Abdeckung (7) zugeordnete Öffnungen (27, 29) für den Durchgang des Fluids aufweist.

8. Tauscher nach Anspruch 8, **dadurch gekennzeichnet, dass** der Kasten (5) zugeordnete Öffnungen (21, 23) für die Strömung des Fluids zwischen dem Bündel (3) und den Rohrstutzen (15, 17) aufweist.

9. Luftansaugvorrichtung, insbesondere für ein Kraftfahrzeug, **dadurch gekennzeichnet, dass** sie einen Wärmetauscher (1) nach einem der vorhergehenden Ansprüche aufweist, und dass sie außerdem eine den Tauscher (1) aufnehmende Ansaugleitung aufweist.

## Claims

1. Heat exchanger between at least two fluids, notably for a motor vehicle, comprising:
- a heat exchange bundle (3) between said fluids, and
- a housing (5) for receiving said bundle (5), having at least one lateral opening (6),
said exchanger also comprising a cover (7) for closing said at least one opening (6) of said housing (5), securely attached in a seal-tight manner to said bundle (3) and to said housing (5) so as to form an inseparable unitary assembly, **characterized in that** said housing (5) is inserted between said bundle (3) and said cover (7).

2. Exchanger according to Claim 1, **characterized in that** said housing (5) has a substantially generally "U" shape, and **in that** said cover (7) has a substantially generally "U" shape complementing the shape of said housing (5) .

3. Exchanger according to either of Claims 1 and 2, **characterized in that** said cover (7) is securely attached by brazing.

4. Exchanger according to any one of the preceding claims, **characterized in that** said cover (7) has a peripheral edge (31) forming a protrusion relative to said bundle (3) and to said housing (5) .

5. Exchanger according to Claim 4, **characterized in that** said peripheral edge (31) comprises fixing means for fixing to a container of said exchanger.

6. Exchanger according to either of Claims 4 and 5, **characterized in that** it comprises sealing means at said peripheral edge (31) of said cover (7).

7. Exchanger according to any one of the preceding claims, **characterized in that** it comprises at least one fluid inlet pipe (15) and one fluid outlet pipe (17), and **in that** said cover (7) has associated orifices (27,29) for the passage of said fluid.

8. Exchanger according to Claim 8, **characterized in that** said housing (5) has associated orifices (21,23) for the circulation of said fluid between said bundle (3) and said pipes (15,17).

9. Air intake device, notably for a motor vehicle, **characterized in that** it comprises a heat exchanger (1) according to any one of the preceding claims, and **in that** it also comprises an intake manifold receiving said exchanger (1).
